# EUROPEAN PATENT SPECIFICATION

(11) **EP 0 456 621 B1**
(45) Date of publication and mention of the grant of the patent: **29.03.1995**
(21) Application number: 91830185.4
(22) Date of filing: 03.05.1991
(51) Int. Cl.: F16K 1/34, F16K 31/50

(54) **Improved screw type valve**
Schraubenventil
Soupape à vis

(30) Priority: 09.05.1990 IT 698490 U
(43) Date of publication of application: 13.11.1991
(73) Proprietor: GALATRON S.r.l., I-46043 Castiglione d/Stiviere (Mantova) (IT)
(72) Inventor: Orlandi, Alessio, I-46043 Castigliobe D/Stiviere (Mantova) (IT)
(74) Representative: Manzoni, Alessandro

(56) References cited:
- DE-B- 2 225 944
- GB-A- 1 104 829
- US-A- 2 348 642
- US-A- 2 593 740
- US-A- 3 633 870

## Description

The present invention relates to screw type valves which usually have a valve shutter with a base seal and are axially movable in a control box between open and closed positons through a rotating control stem. The stem and shutter connect through threaded parts in such a way that rotations of the stem cause the axial translations of the shutter from one position to the other.

Such a screw type valve is known from US-A-3 633 870.

The control stem for said valves is usually made from rods and, since it is machined on the outside, the stem is solid in each section, even where it could be lightened by making the sections hollow. This is because, so as to make the sections hollow, the stem must be reprocessed and the cost of additional mechanical operations does not justify the quantity of material saved when using the present equipment.

The object of the present invention is to supply a screw type valve with a control stem which is hollow at least at the lower end in an axial direction. This embodiment would allow:
- a saving of material which would have economical advantages without weakening or affecting the behaviour of the stem, and especially,
- to create a container inside the stem designed to hold grease for a longer lasting lubrification of the control stem and shutter coupling, with both operational and durability advantages.

So as to achieve the above mentioned advantages, the forming of at least one hollow part at the lower end of the stem is obtained from the use of new machining equipment which does not require the reprocessing of the part, but forms the hollow part in sequence with the other mechanical operations on the stem. There are therefore no added costs and the recovered material leads to economical advantages.

At present, the shutter has a dead axially threaded hole for its coupling with the control stem. This requires that the piece is reprocessed so as to form a threaded hole on the bottom enabling a screw to fix the base seal. Even in this case the reprocessing of the piece and each additional operation leads to increases in production costs.

Another object of the present invention is to supply a screw type valve, the shutter of which has an axial through hole of two diameters, which are machined and threaded by the same part without reprocessing the piece, without added costs and, once again, material is advantageously recovered from the opening made at the bottom of the shutter to form the through hole.

The here proposed screw type valve is substantially in accordance with claim 1 which will follow. It will however be described in more detail with references made to the attached drawings in which:
- Fig. 1: is the separate and partial section of the components of the valve;
- Fig. 2: is a partial section of the assembled valve.

The valve essentially comprises a body (10), a shutter (11) which is axially controlled inside the body (10) without rotating and a control stem (12) which rotates without translating in the body (10). The stem (12) and the shutter (11) are coupled through threaded parts (13) for the opening and closing movements of the valve.

The assembling and interaction of the three components (10, 11 and 12) are known and will therefore not be described.

However, in accordance with the present invention, the lower end of the control stem (12), the one which is coupled to the shutter (11), has an axial cavity (12a) which, as well as enabling the recovery of material, also acts as a container for holding a lubrificating grease (12b).

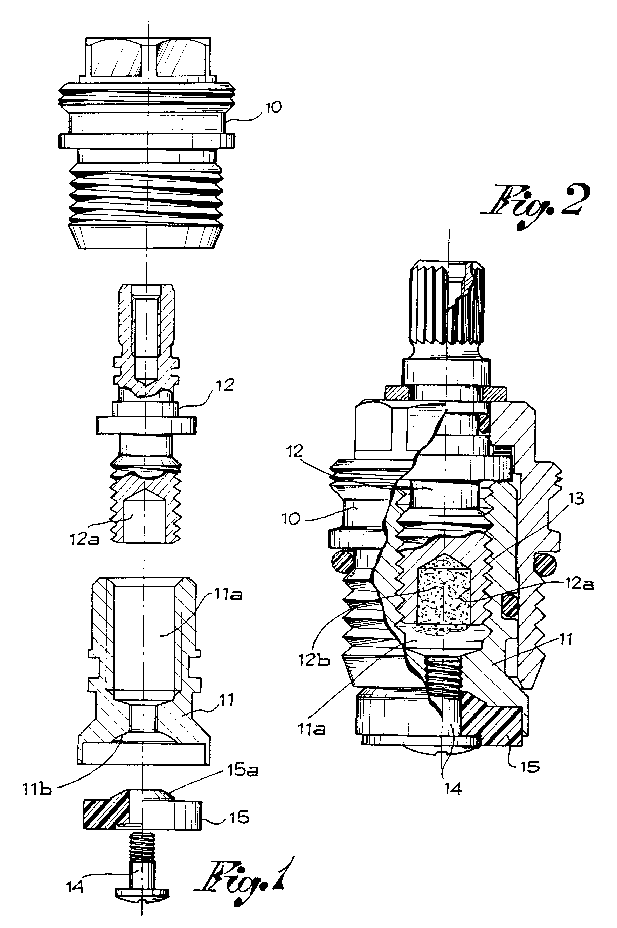

The shutter (11) has an axial through hole (11a) (Fig. 1), which has a threaded part with a diameter able to couple with the control stem (12) and a second threaded part with a diameter able to receive a screw (14) for the fixing of a base seal (15) to the shutter itself (Fig. 2). The screw (14) has a convex head which helps reduce the noise of the flow of water when being delivered and a partially cylindrical stem with a smooth surface. The base seal (15) has a hole with a surface which conjugates with the smooth part of the stem of the screw (14) and a conic portion (15a) which settles in a countersink (11b) in the threaded hole in which the screw is inserted. Thus, when the seal is fixed to the shutter, it is simultaneously tightened around the stem of the screw and in the countersink (11b) assuring a seal against water being drawn towards the axial through hole.

The above described valve is presented with a new configuration and combination of its components so as to make its realization more practical and achieve both operational and economical advantages.

## Claims

1. A screw type valve comprising a valve shutter (11) with a base seal (15) which is axially movable in a control box (10) from an open to a closed position through a rotating control stem (12), the stem and shutter being connected through threaded parts (13) in such a way that the rotations of the stem cause axial translations of the shutter from one position to the other, characterized in that the lower end of the control stem (12), the one which is coupled to the shutter, had an axial cavity (12a) which, as well as enabling the recovery of material, also acts as a container for holding lubrificating grease.

2. A screw type valve as claimed in claim 1, characterized in that said valve shutter (11) has an axial through hole which has a first threaded part for connecting the control stem (12) and a second threaded part for receiving a screw (14) for fixing the base seal (15) to the shutter, the screw having a convex head.

3. A screw type valve as claimed in claim 1, characterized in that said valve shutter (11) has an axial through hole which has a first threaded part for connecting the control stem (12) and a second threaded part for receiving a screw (14) for fixing the base seal (15) to the shutter, said hole being formed with the piece being machined in a single direction.

4. A screw type valve as claimed in claim 2 or 3, characterized in that the base seal (15) has a conic portion (15a) which settles in a corresponding countersink (11b) of the second part of the axial hole of the shutter when the seal is fixed to the shutter.

## Patentansprüche

1. Schraubventil, das ein Verschlußorgan (11) mit einer Dichtung (15) am unteren Ende enthält, das in einem Führungskörper (10) in axialer Richtung zwischen einer Offenstellung und einer Schließstellung mit Hilfe einer drehbaren Betätigungsstange (12) hin- und herverstellbar ist, die mit dem Verschlußorgan (11) über mit Gewinde versehene Bereiche (13) derart verbunden ist, daß die Drehbewegungen der Betätigungsstange (12) axiale Translationsbewegungen zwischen der einen und der anderen Stellung erzeugen, dadurch gekennzeichnet, daß das mit dem Verschlußorgan (11) gekoppelte untere Ende der Betätigungsstange (12) eine axiale Ausnehmung (12a) aufweist, die nicht nur Materialersparnis mit sich bringt, sondern auch als Schmiermittelbehälter dient.

2. Schraubventil nach Anspruch 1, dadurch gekennzeichnet, daß das Verschlußorgan (11) eine durchgehende Axialbohrung mit einer ersten, mit Gewinde versehenen Partie zur Herstellung der Verbindung mit der Betätigungsstange (12) und einer zweiten mit Gewinde versehenen Partie zur Aufnahme einer Schraube (14) aufweist, welche Schraube (14) einen konvex gewölbten Kopf aufweist und zur Befestigung der Dichtung (15) am Verschlußorgan (11) dient.

3. Schraubventil nach Anspruch 1, dadurch gekennzeichnet, daß das Verschlußorgan (11) eine durchgehende Axialbohrung aufweist, die eine erste mit Gewinde versehene Partie zur Herstellung der Verbindung mit der Betätigungsstange (12) und einer zweiten mit Gewinde versehenen Partie zur Aufnahme einer Schraube (14) aufweist, die zur Befestigung der Dichtung (15) am Verschlußorgan (11) dient, wobei diese durchgehende Axialbohrung (15) durch Bearbeitung des Werkstücks in einer einzigen Richtung hergestellt wird.

4. Schraubventil nach Anspruch 2 oder 3, dadurch gekennzeichnet, daß die Dichtung (15) einen konischen Bereich (15a) aufweist, der in eine entsprechend geformte Ausnehmung (11b) der zweiten Partie der Axialbohrung des Verschlußorgans einsitzt, wenn die Dichtung am Verschlußorgan befestigt ist.

## Revendications

1. Une soupape du type à vis comprenant un obturateur (11) avec un joint (15) à la base, en mesure de se déplacer axialement dans un corps de guidage (11) de la position ouverte à la position fermée à travers une tige de contrôle tournante (12); la tige et l'obturateur sont reliés à travers des parties filetées (13) de telle façon que la rotation de la tige produit des mouvements de translation axiaux de l'obturateur d'une position à l'autre; elle est caractérisée par le fait que l'extrémité inférieure de la tige (12), celle qui est accouplée à l'obturateur, possède une cavité axiale (12a) permettant non seulement la récupération de matériel, mais jouant également le rôle de récipient pour la graisse lubrifiante.

2. Une soupape du type à vis conforme à la revendication 1, caractérisée par le fait que ledit obturateur (11) présente un trou passant axial qui a une première partie filetée destinée à s'accoupler avec la tige de manoeuvre (12), et une deuxième partie filetée destinée à recevoir une vis (14) ayant pour rôle de fixer le joint de base (15) à l'obturateur, la vis étant du type à tête bombée.

3. Une soupape du type à vis conforme à la revendication 1, caractérisée par le fait que ledit obturateur (11) présente un trou passant axial qui a une première partie filetée destinée à s'accoupler avec la tige de manoeuvre (12), et une deuxième partie filetée destinée à recevoir une vis (14) ayant pour rôle de fixer le joint de base (15) à l'obturateur, ledit trou étant obtenu en usinant la pièce dans une seule direction.

4. Une soupape du type à vis conforme à la revendication 2 ou 3, caractérisée par le fait que le joint de base possède une partie conique (15a) qui s'insère dans l'évasement correspondant (11b) situé sur la deuxième partie du trou axial de l'obturateur lorsque le joint est fixé sur l'obturateur.
